# EUROPEAN PATENT APPLICATION

(11) **EP 4 628 291 A1**
(43) Date of publication of application: **08.10.2025**
(21) Application number: 24168184.0
(22) Date of filing: 03.04.2024
(51) Int. Cl.: B29D 11/00, G02C 7/04

(54) **PROCESS OF MANUFACTURING CUSTOMIZED CONTACT LENS FOR ASTIGMATISM, CONTACT LENS MANUFACTURED BY THE PROCESS, AND UNFINISHED LENS OF THE CONTACT LENS**

(71) Applicant: Wang, Song-Ping, Taichung City 40759 (TW)
(72) Inventor: Wang, Song-Ping, Taichung City 40759 (TW)
(74) Representative: Cabinet Chaillot

(57) **Abstract**

A process of manufacturing a customized contact lens for astigmatism is provided. The process indudes providing at least one optical part containing astigmatic optics on an convex front surface of a lens to prepare male and female molds, the male mold being spaced from the female mold by a gap induding a thickness of the optical part and a thickness to be machined; pouring material for contact lens into the female mold; joining the male mold and the female mold; curing the material for contact lens to form an unfinished lens, the unfinished lens induding a convex front surface and a concave rear surface; removing the female mold and machining the convex front surface of the unfinished lens on the male mold to remove the thickness to be machined other than the optical part; and removing the unfinished lens and hydrating same to manufacture a finished contact lens.

## Description

### FIELD OF THE INVENTION

The invention relates to processes of manufacturing customized contact lens for astigmatism and more particularly to a process of manufacturing customized contact lens for astigmatism, contact lens manufactured by the process, and unfinished lens of the contact lens.

### BACKGROUND OF THE INVENTION

A conventional process of manufacturing contact lenses involves using a lathe for cutting or die casting. Conventional contact lenses have a concave rear surface for astigmatism and a convex front surface for myopia and other eye diseases.

The conventional process of manufacturing contact lenses involves using a lathe for cutting an unfinished lens. However, the process is time consuming, has a poor performance, is material consuming, and has a high manufacturing cost. Thus, the manufactured contact lenses are expensive. Typically, such contact lenses are customized contact lenses. Further, color is printed on the finished lenses if the customized contact lenses are color. However, color of the manufactured contact lenses may fade. And in turn, it may hurt the eyes. Therefore, almost all customized contact lenses are not color.

The conventional process of manufacturing contact lenses involves die casting has advantages including quick and mass production. The manufactured contact lenses are inexpensive and disposable. However, a lens for astigmatism has an axis of astigmatism and different molds are required for manufacturing lenses for astigmatism of different refractive angles. Thus, it is impossible to manufacture lenses for astigmatism of different refractive angles in mass production. Further, it is more difficult of manufacturing lenses for myopia, presbyopia, and multi-focus, and manufacturing arc lenses and color lenses due to the required large number of molds such as several hundred millions of molds. This is not feasible. Thus, it is not industrially practical. Only several number of combinations thereof is possible with very few selections.

Thus, the need for manufacturing a lens for astigmatism having different optical functions with a minimum number of molds in mass production still exists.

### SUMMARY OFTHE INVENTION

It is therefore one object of the invention to provide a process of manufacturing a customized contact lens for astigmatism, comprising the steps of (A) providing at least one optical part containing astigmatic optics on an convex front surface of a lens to prepare a male mold and a female mold respectively, wherein the male mold is spaced from the female mold by a gap which includes a thickness of the optical part and a thickness to be machined; (B) pouring material for contact lens into the female mold; (C) joining the male mold and the female mold; (D) curing the material for contact lens to form an unfinished lens, the unfinished lens including a convex front surface and a concave rear surface; (E) removing the female mold and machining the convex front surface of the unfinished lens on the male mold to remove the thickness to be machined other than the optical part wherein the machining comprises the sub-steps of: (E1) executing a program of a prescription of contact lens to generate a lens document; (E2) using software installed in a CNC lathe to open the lens document and translating the lens document into a format which can be read by CNC lathe software; (E3) inputting a thickness of the unfinished lens into a CNC lathe computer and performing the CNC lathe software to read the thickness of the unfinished lens; and (E4) executing the CNC lathe software to activate the CNC lathe based on the lens document and the thickness of the unfinished lens; and (F) removing the unfinished lens and hydrating the unfinished lens to manufacture a finished contact lens.

It is another object of the invention to provide an unfinished lens for a customized contact lens for astigmatism, comprising a convex front surface and a concave rear surface wherein the customized contact lens for astigmatism includes a central optical area, a peripheral area around the central optical area, and a periphery around the peripheral area; and wherein the central optical area on the convex front surface includes a thickness of astigmatism optics and a thickness to be machined.

It is yet another object of the invention to provide a customized contact lens for astigmatism, manufactured by removing the thickness to be machined from the unfinished lens, comprising a convex front surface and a concave rear surface wherein the customized contact lens for astigmatism includes a central optical area, a peripheral area around the central optical area, and a periphery around the peripheral area; and wherein the central optical area on the convex front surface includes an astigmatism optical area.

The invention has the following advantages and benefits in comparison with the conventional art: the process of manufacturing customized contact lens for astigmatism uses a male mold and a female mold to manufacture unfinished lens for contact lenses, resulting in a great reduction of manufacturing cost The unfinished lens has a convex front surface and a concave rear surface. The unfinished lens has a prototype of contact lens and thus the subsequent cutting step can be done quickly. For example, only one sixth to one tenth of manufacturing time is required in comparison with the conventional process of manufacturing customized contact lenses. Only one set of molds are required to manufacture customized contact lenses for astigmatism, myopia, presbyopia, and multi-focus, and even manufacture color contact lenses of different axis degree. More than 95% of unfinished lens for customized contact lens for astigmatism, myopia, presbyopia, multi-focus, and customized, color contact lens for astigmatism can be manufactured.

The above and other objects, features and advantages of the invention will become apparent from the following detailed description taken with the accompanying drawings

### BRIEF DESCRIPTION OF THE DRAWINGS

FIG. 1 is a flow chart of a process of manufacturing customized contact lens for astigmatism according to the invention;
FIG. 2 is a perspective view of a mold for the process of manufacturing customized contact lens for astigmatism according to the invention;
FIG. 3 is a longitudinal sectional view of FIG. 2;
FIG. 4 is a longitudinal sectional view of the female mold filled with material for contact lens;
FIG. 5 is a view similar to FIG. 3 showing the male mold and the female mold being joined;
FIG. 6 is a longitudinal sectional view showing the male mold and an unfinished lens being fastened by an axis of rotation of a CNC lathe;
FIG. 7 is a longitudinal sectional view of the unfinished lens on the male mold being machined to have an optical thickness for contact lens for astigmatism;
FIG. 8 is a top plan view of the finished customized contact lens for astigmatism;
FIG. 9 is a side elevation of FIG. 8;
FIG. 10 is a perspective of FIG. 8;
FIG. 11 is another perspective of FIG. 8; and
FIG. 12 is a sectional view taken along line 12-12 of FIG. 8.

### DETAILED DESCRIPTION OF THE INVENTION

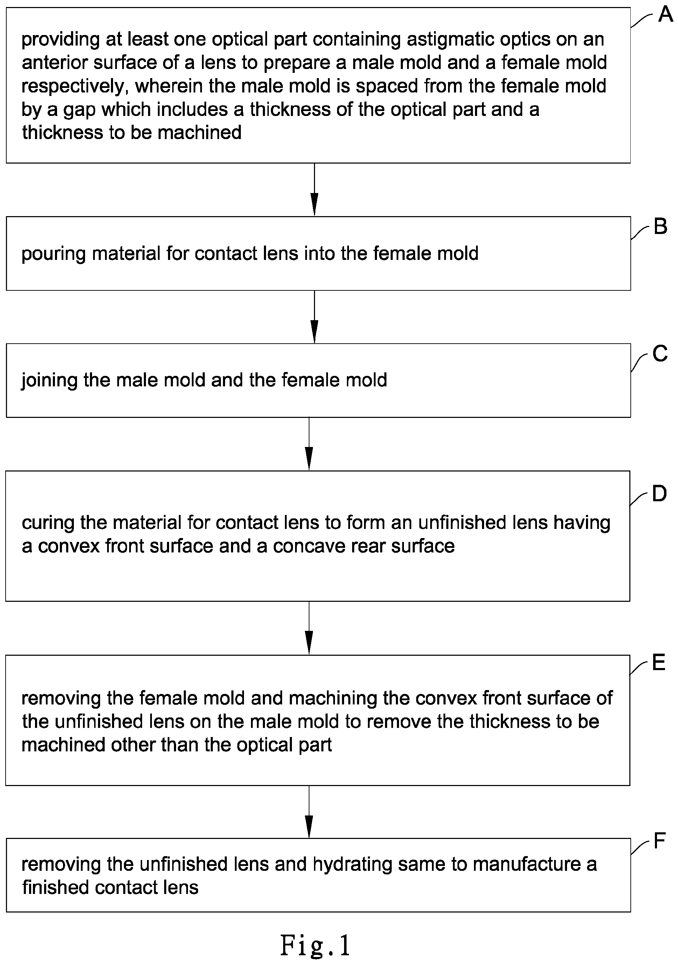

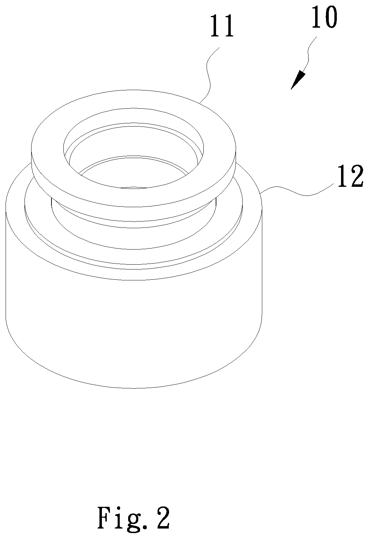

Referring to FIG. 1, a flow chart of a process of manufacturing customized contact lens for astigmatism in accordance with the invention is illustrated. The process is discussed in conjunction with FIGS. 2 to 7 and comprises the following steps as discussed in detail below.

In step A, at least one optical part containing astigmatic optics on an-convex front surface of a lens is provided to prepare a male mold 11 and a female mold 12 respectively. The male mold 11 is spaced from the female mold 12 by a gap. The gap includes a thickness of the optical part and a thickness to be machined.

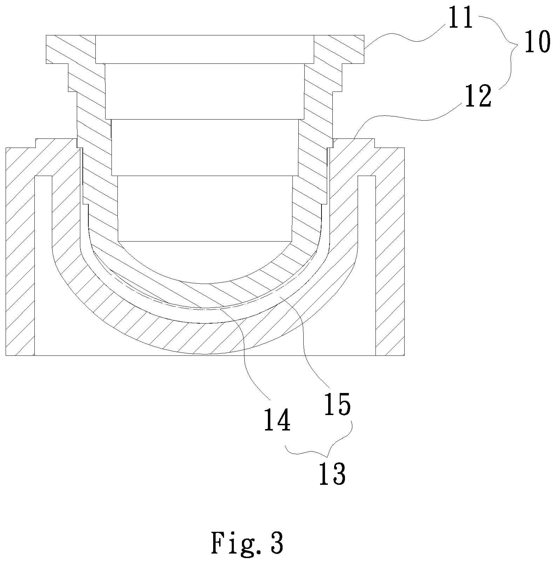

As shown in FIG. 2, it is a perspective view of a mold 10 for the process of manufacturing customized contact lens for astigmatism according to the invention, and as shown in FIG. 3, it is a longitudinal sectional view of FIG. 2. The mold 10 includes a male mold 11 and a female mold 12. A gap 13 is formed between the male mold 11 and the female mold 12. In FIG. 3, the gap 13 between the male mold 11 and the female mold 12 includes a thickness 14 of a pre-shaped optical part and a thickness 15 to be machined. The pre-shaped astigmatism optical parts have many different specifications and shapes of surfaces, positions of the surfaces, and thicknesses of the pre-shaped astigmatism optical parts are different. The invention machines the thickness 15 to obtain a shape of surface, a position of the surface, and thickness of the pre-shaped astigmatism optical part In the embodiment, the male mold 11 is selected from a highly polarized material such as polybutylene telephthalide (PBT). PBT is a highly polarized plastic that includes aromatic polyester, has good adhesion properties, and can adhere to the unfinished lens 32 on the material for contact lens 30. The female mold 12 is made of a non-polarized material such as polypropylene (PP). PP has low polarity so that it has no or very low adhesion and will not adhere to the unfinished lens 32 below.

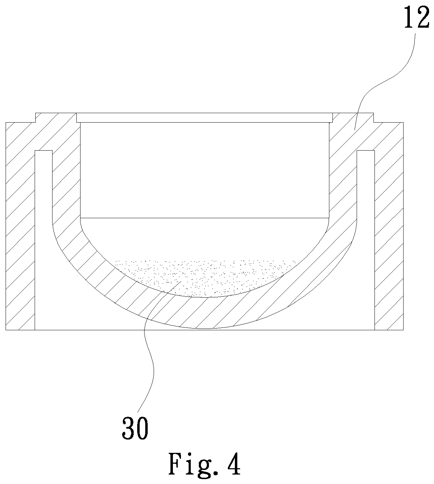

In step B, the material for contact lens 30 is poured into the female mold 12. As shown in FIG. 4, the female mold 12 is filled with the material for contact lens 30. In the embodiment, a polarity of the material for contact lens 30 is opposite to that of the male mold 11. But the polarity of the material for contact lens 30 is but not limited to hydrogel or silicone glue. The material of the hydrogel generally has polyacrylic acid monomers, and more specifically include any hydrogel component such as but not limited to 2-hydroxyethyl methacrylate (HEMA), N-(2-IHydroxypropyl)methacrylambe (HPMA), methyl methacrylate (acrylic monomer)(methyl methacrylate (MMA)), glyceryl methacrylate (GMA) and their combinations. The hydrogel can improve the wettability and surface lubricity of the lens and make it more comfortable to wear.

The silicone glue includes but not limited to balafilcon A, comfilcon A, efrofilcon A, enfilcon A, galyfilcon A, lotrafit:on A, lotrafilcon B, narafilcon A, narafilcon B, senofilcon A, delefilcon A, and somofilcon A The silicone glue can increase the oxygen permeability of the lens and prevent corneal hypoxia Further, other components such as blue ray and/or UV absorptive agent.

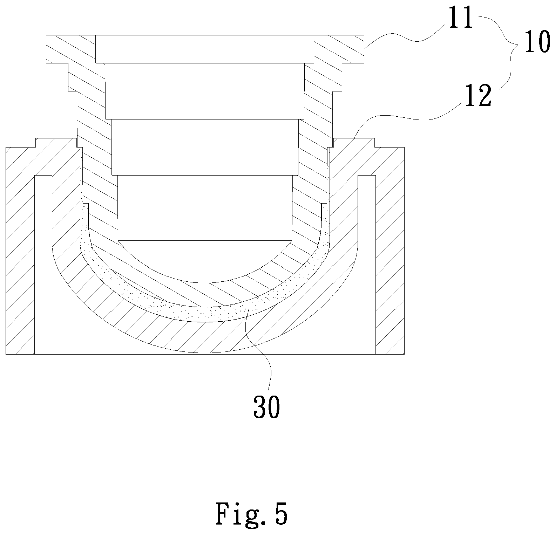

In step C, the male mold 11 and the female mold 12 are joined. As shown in FIG. 5, it is a longitudinal sectional view of the male mold 11 and the female mold 12 being joined.

In step D, the material for contact lens is cured to form an unfinished lens. The unfinished lens has a convex front surface and a concave rear surface, i.e., being a prototype of a contact lens. In the embodiment, the mold 10 having the material for contact lens 30 is placed in a device (not shown) for curing. The device performs thermal polymerization or emit ultraviobt (UV) light to cure the mold 10.

In step E, the female mold is removed and the convex front surface of the unfinished lens is machined on the male mold to remove the thickness to be machined other than the optical part In the embodiment, the male mold 11 is made of PBT and is adhered to the unfinished lens 32. The female mold 12 is made of PP and there is no adhesion to the unfinished lens 32. Thus, the female mold 12 is easy to separate from the unfinished lens 32 in the mold separation. As such, the unfinished lens 32 is adhered to the male mold 11.

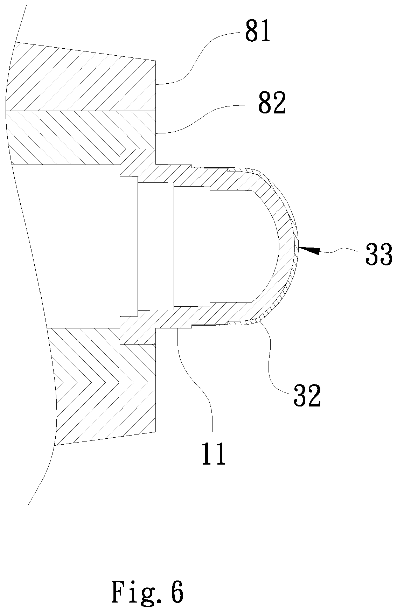

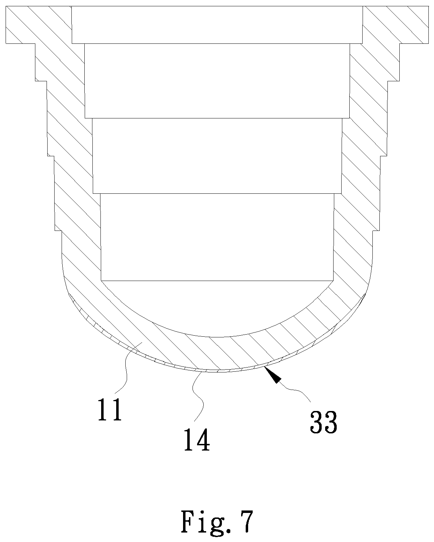

In FIG. 6, it shows the female mold is removed with only the unfinished lens 32 adhered to the male mold 11 and the male mold 11 is fastened by an axis of rotation 81 of a computer numerical control (CNC) lathe. It is stable and immovable because the unfinished lens 32 is adhered to the male mold 11. Thus, the unfinished lens 32 can be machined. For example, a convex front surface 33 is machined by cutting or sculpturing. This ensures precision and correct optical properties. Further, there is no need of calibration and it is quick The machining includes the following sub-steps: E1 of executing a program of a prescription of contact lens to generate a lens document The lens document is a file having many parameters including parameters of detailed information of the prescription of a contact lens. Basically, it contains design details (e.g., optical parameters and structure parameters including degree of astigmatism, degree of axis, curvature, and XY coordinate) of the lens. E2 of using software installed in the CNC lathe to open the lens document and translating the lens document into a format which can be read by CNC lathe software. E3 of inputting thickness of the unfinished lens into a CNC lathe computer and software installed in the CNC lathe is capable of reading same. E4 of executing the CNC lathe software to activate the CNC lathe based on the lens document and the thickness of the unfinished lens. As shown in FIG. 7, the thickness 15 to be machined is completely removed from the lens with the thickness 14 of the pre-shaped astigmatism remained. As shown in FIG. 6, a chuck 82 is provided on the axis of rotation 81 and is adapted to fasten the male mold 11. A pressure of 0.40-0.60mpa is applied on the male mold 11 by the chuck 82. The male mold 11 and the unfinished lens 32 may be deformed if the pressure applied by the chuck 82 is greater than 0.60mpa. To the contrary, the male mold 11 and the unfinished lens 32 may rotate if the pressure applied by the chuck 82 is less than 0.40mpa. The above two cases may compromise the machining of the unfinished lens 32.

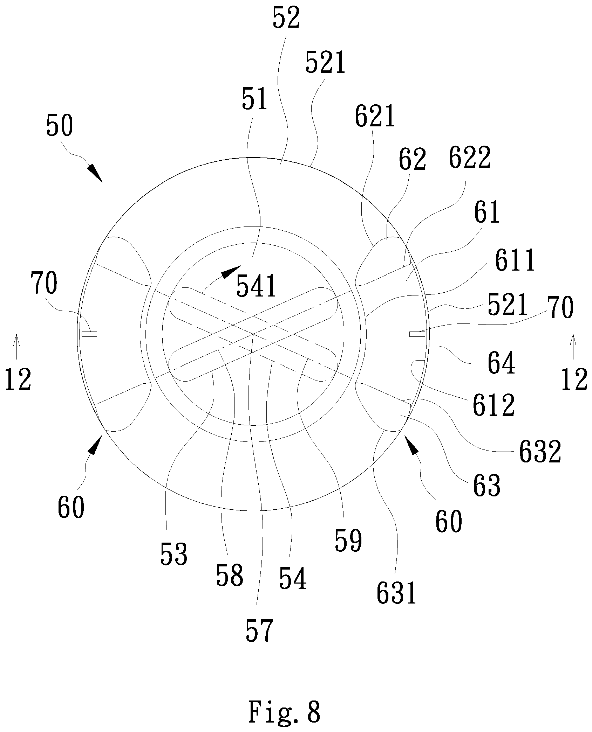

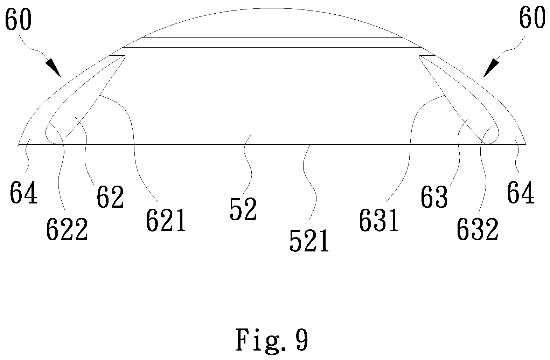

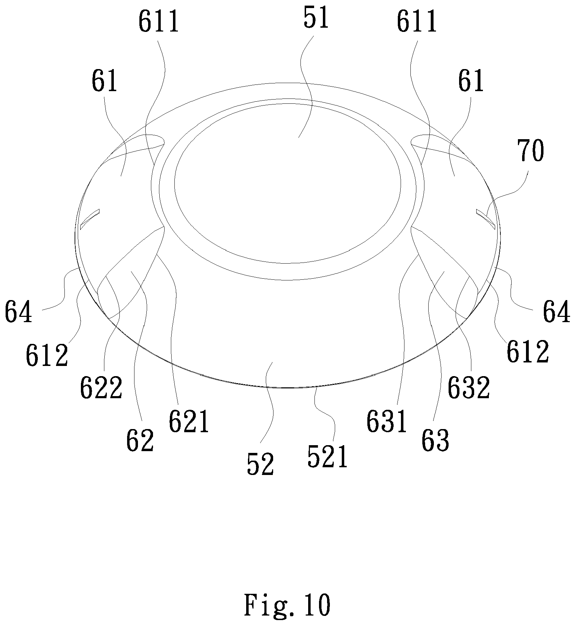

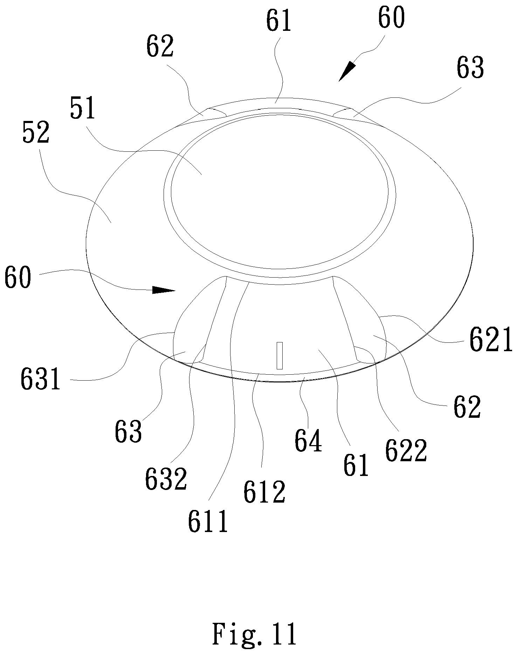

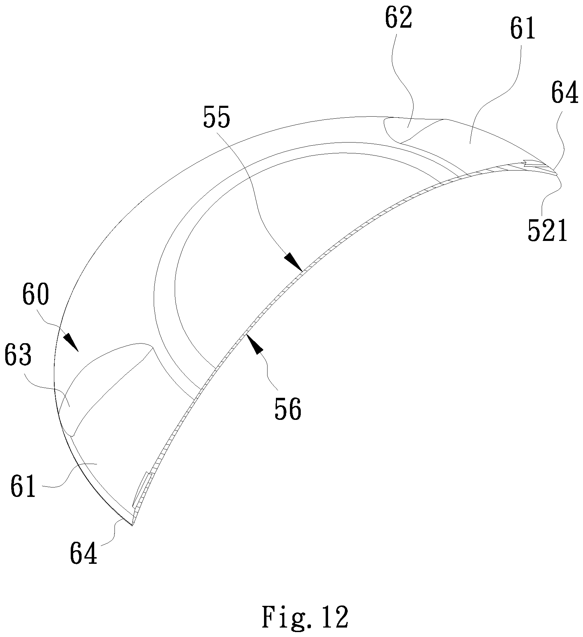

In step F, the unfinished lens is removed and hydrated. As a result, a finished contact lens is manufactured. Referring to FIGS. 8 to 12, they show a customized contact lens for astigmatism 50 manufactured by the process of the invention, which comprise a convex front surface 55 and a concave rear surface 56. The customized contact lens for astigmatism 50 includes a central optical area 51 and a peripheral area 52 around the central optical area 51. The central optical area 51 on the convex front surface 33 includes an astigmatism optical area 53 which shows an axis degree of astigmatism. In the central optical area 51, there is another astigmatism optical area 54 which is shown in broken line and an arrow 541 indicates that the astigmatism optical area 53 is at any axis degree of astigmatism.

In another embodiment, in step A at least one of optical combination of myopia, presbyopia, and multi-focus is incorporated into the convex front surface of the lens to obtain an unfinished lens having combined optical features. In step E, the unfinished lens having combined optical features is cut to form a lens having combined optical features including astigmatism, myopia, presbyopia, and multi-focus. As a result, the customized contact lens for astigmatism 50 is manufactured. Other components such as the raised members 60 of the lens can be processed as above and a detailed description thereof is omitted herein for the sake of brevity.

In the embodiments shown in FIGS. 8 to 12, a periphery 521 is provided around the peripheral area 52. On two opposite sides of the convex front surface 55, there are provided two raised members 60 respectively. The raised member 60 includes an upper surface 61, an upward indined surface 62, a downward indined surface 63, and an edge surface 64.

In one embodiment, the upper surface 61 includes an inner edge 611 and an outer edge 612. The raised member 60 is provided on the peripheral area 52. The inner edge 611 and the outer edge 612 are parallel to the periphery 521. Thickness of the raised member 60 is increased from the inner edge 611 to the outer edge 612, and thickness of the raised member 60 is decreased from the outer edge 612 to the periphery 521. The edge surface 64 is formed between the outer edge 612 and the periphery 521. That is, the edge surface 64 is provided between the outer edge 612 and the periphery 521. Thickness of the edge surface 64 is decreased from an inner edge to an outer edge to be the same as that of the periphery 521.

In an embodiment, the upward indined surface 62 is adjacent to the upper surface 61 and the edge surface 64. Thickness of the upward indined surface 62 is counterclockwise decreased from the upper surface 61 and the edge surface 64 along the periphery 521 and finally the upward indined surface 62 joins the peripheral area 52. The upward indined surface 62 has an upward arc edge 621 which extends from the inner edge 611 to the periphery 521. A joining portion of the upper surface 61 and the upward indined surface 62 is provided with a contour line 622. As shown in FIG. 8, the contour line 622 is disposed radially on the lens. An extension line 58 of the contour line 622 pass through a center 57 of the lens. The extension line 58 is drawn as a center line and that means it does not exist, i.e., being virtual. In fact, a joining portion of the upper surface 61 and the upward indined surface 62 is an arc forming the contour line 622 having an arc cross-section.

In an embodiment, the downward indined surface 63 is adjacent to the upper surface 61 and the edge surface 64. Thickness of the downward indined surface 63 is clockwise decreased from the upper surface 61 and the edge surface 64 along the periphery 521 and finally the downward indined surface 63 joins the peripheral area 52. The downward indined surface 63 has a downward arc edge 631 which extends from the inner edge 611 to the periphery 521. A joining portion of the upper surface 61 and the downward indined surface 63 is provided with a contour line 632. As shown in FIG. 8, the contour line 632 is disposed radially on the lens. An extension line 59 of the contour line 632 pass through the center 57 of the lens. The extension line 59 is drawn as a center line and that means it does not exist, i.e., being virtual. In fact, a joining portion of the upper surface 61 and the downward inclined surface 63 is an arc forming the contour line 632 having an arc cross-section.

In an embodiment, both the contour lines 622 and 632 have an arc cross-section. This gives a degree of comfort to a contact lenses wearer when the contact lenses contact the eyelids. Further, shapes and structures of the upward arc edge 621 and the downward arc edge 631 enables the eyelid to easily enter the raised member 60. Furthermore, the upward indined surface 62 and the downward indined surface 63 enable the eyelid to gradually move in order to decrease a sense of the existence of the raised member 60 and enable the eyelid to cooperate with the raised member 60. The edge surfaces 64 of the raised members 60 are supported by two sides of the eyes. This gives a degree of comfort to a contact lenses wearer when the contact lenses contact the eyes.

As shown in FIG. 8, in an embodiment a groove 70 is provided in the raised member 60. A center line passes through the grooves 70, the raised members 60, and the center 57 of the lens. A contact lenses wearer can determine position of the customized contact lens for astigmatism 50 by viewing the grooves 70 prior to wearing the customized contact lens for astigmatism 50.

In the invention the raised members 60 provided at two sides of the customized contact lens for astigmatism 50. The contact lens is stably supported by the eyeball due to different thicknesses of different parts of the contact lens. Thus, the contact lens is positioned. The contact lens is not easy to displace even when the contact lenses wearer winks or exercises. Further, the customized contact lens for astigmatism 50 of the invention is designed based on ergonomics. Shapes of the raised members 60 are arc. Thus, the contact lenses can be stably supported by the eyeballs and this gives a degree of comfort to a contact lenses wearer.

In another embodiment, an ink is applied on a specific area of the male mold before the male mold and the female mold are joined in step C. After the male mold and the female mold are joined, the material for contact lens may penetrate or join the ink. As a result, a color contact lens is manufactured after the material for contact lens has been cured. Material of the ink may further comprise polymer and dispersant but not limited to such.

In another embodiment, a transparent protective layer is applied on the male mold prior to applying ink on the male mold. The ink is disposed between the protective layer and the material for contact lens. Thereafter, the male mold and the female mold are joined and cured. As a result, a color contact lens for astigmatism having the ink and the protective layer is manufactured.

In the embodiment, the protective layer includes molding polymers, hydrophilic polymers and solvents in which the molding polymers are selected from polyether, polyacrylic acid and its derivatives, polyether polyol, polyester polyols, polymethyl methacrylate and its derivatives, and one or a combination of two or more of styrene-acrylic acid copolymer.

The protective layer has an optimum viscosity and affinity. The protective layer is compatible with the ink. The protective layer has good physical and mechanical properties. Thus, the contact lenses are not subject to damage in a subsequent machining step. The ink is enclosed by the protective layer so that the ink is prevented from contacting the eyeball. Therefore, both the contact lenses and the eyeballs of a contact lenses wearer are protected.

In another embodiment, the process of the invention provides 3 molds. The female mold of each mold has the same curvature at the joining surface and the male mold of each mold has different curvature at the joining surface. Three unfinished lenses having different concave rear surfaces are manufactured. The three unfinished lenses have the same convex front surface. Therefore, more than 95% of unfinished lens for customized contact lens for astigmatism, myopia, presbyopia, multi-focus, and customized, color contact lens for astigmatism can be manufactured.

The invention has the following advantages and benefits in comparison with the conventional art: the process of manufacturing customized contact lens for astigmatism uses a male mold and a female mold to manufacture unfinished lens for contact lenses, resulting in a great reduction of manufacturing cost The unfinished lens has a prototype of contact lens and thus the subsequent cutting step can be done quickly. For example, only one sixth to one tenth of manufacturing time is required in comparison with the conventional process of manufacturing customized contact lens. Only one set of molds are required to manufacture customized contact lenses for astigmatism, myopia, presbyopia, and multi-focus, and even manufacture color contact lenses of different axis degree. More than 95% of unfinished lens for customized contact lens for astigmatism, myopia, presbyopia, multi-focus, and customized, color contact lens for astigmatism can be manufactured in addition to the curvature requirement The customized, color contact lens for astigmatism manufactured by the process of the invention has ink uniformly mixed in the material for contact lens. Further, the protective layer can separate the ink from the eyeball. As a result the problems encountered by the conventional process of manufacturing customized contact lens are solved.

While the invention has been described in terms of preferred embodiments, those skilled in the art will recognize that the invention can be practiced with modifications within the spirit and scope of the appended claims.

## Claims

1. A process of manufacturing a customized contact lens for astigmatism, comprising the steps of:
providing at least one optical part containing astigmatic optics on an convex front surface of a lens to prepare a male mold and a female moldrespectively, wherein the male mold is spaced from the female mold by a gap which includes a thickness of the optical part and a thickness to be machined (A);
pouring material for contact lens into the female mold (B);
joining the male mold and the female mold (C);
curing the material for contact lens to form an unfinished lens, the unfinished lens including a convex front surface and a concave rear surface (D);
removing the female mold and machining the convex front surface of the unfinished lens on the male mold to remove the thickness to be machined other than the optical part (E), wherein the machining comprises the sub-steps of: executing a program of a prescription of contact lens to generate a lens document (E1); using software installed in a CNC lathe to open the lens document and translating the lens document into a format which can be read by CNC lathe software (E2); inputting a thickness of the unfinished lens into a CNC lathe computer and performing the CNC lathe software to read the thickness of the unfinished lens (E3); and executing the CNC lathe software to activate the CNC lathe based on the lens document and the thickness of the unfinished lens (E4); and
removing the unfinished lens and hydrating the unfinished lens to manufacture a finished contact lens(F).

2. The process of claim 1, wherein in step (A) at least one of optical combination of myopia, presbyopia, and multi-focus is incorporated into the convex front surface of the lens; and wherein in step (E) the unfinished lens having optical features including astigmatism, myopia, presbyopia, and multi-focus is machined.

3. The process of claim 1, wherein in step (C) an ink is applied on a predetermined area of the male mold before the male mold and the female mold are joined, and after the male mold and the female mold are joined, the material for contact lens penetrates or joins the ink to manufacture a color contact lens after the material for contact lens has been cured.

4. The process of claim 3, wherein a transparent protective layer is applied on the male mold prior to applying ink on the male mold, the ink is disposed between the protective layer and the material for contact lens, and the male mold and the female mold are joined and cured thereafter.

5. The process of claim 1, wherein the male mold is formed of a material configured to adhere to the unfinished lens, and the female mold is formed of a material configured to not adhere to the unfinished lens.

6. The process of claim 1, wherein three molds are provided, the female mold of each mold has the same curvature at a joining surface, and the male mold of each mold has a different curvature at the joining surface so that three unfinished lenses having different concave rear surfaces are manufactured, and the three unfinished lenses have the same convex front surface.

7. The process of claim 1, wherein the material for contact lens is hydrogel or silicone glue, the male mold is formed of a highly polarized material and has a polarity different from that of the material for contact lens, and the female mold is formed of a non-polarized material.

8. The process of claim 7, wherein the male mold is polybutylene telephthalide (PBT) and the female mold is polypropylene (PP).

9. The process of claim 1, wherein in step (E) a chuck is provided on an axis of rotation and is configured to fasten the male mold so as to machine the convex front surface of the unfinished lens; and wherein a pressure of 0.40-0.60mpa is applied on the male mold by the chuck.

10. An unfinished lens (32) for a customized contact lens for astigmatism (50), comprising a convex front surface (33) and a concave rear surface wherein the customized contact lens for astigmatism (50) includes a central optical area (51), a peripheral area (52) around the central optical area (51), and a periphery (521) around the peripheral area (52); and wherein the central optical area (51) on the convex front surface (33) includes a thickness (14) of astigmatism optics and a thickness (15) to be machined.

11. The unfinished lens (32) of claim 10, further comprising a plurality of predetermined optics incorporated into the central optical area (51) on the convex front surface (33).

12. A customized contact lens for astigmatism (50), manufactured by removing the thickness (15) to be machined from the unfinished lens (32) of claim 10, comprising a convex front surface (55) and a concave rear surface (56) wherein the customized contact lens for astigmatism (50) includes a central optical area (51), a peripheral area (52) around the central optical area (51), and a periphery (521) around the peripheral area (52); and wherein the central optical area (51) on the convex front surface (55) includes an astigmatism optical area (53).

13. The customized contact lens for astigmatism (50) of claim 12, further comprising two raised members (60) on two opposite sides of the convex front surface (55) respectively wherein the raised members (60) are disposed on the peripheral areas (52) respectively, each of the raised members (60) include an upper surface (61), an upward indined surface (62), a downward indined surface (63), and an edge surface (64), the upper surface (61) includes an inner edge (611) and an outer edge (612), the edge surface (64) is formed between the outer edge (612) and the periphery (521), a thickness of the raised member (60) is increased from the inner edge (611) to the outer edge (612), and a thickness of the raised member (60) is decreased from the outer edge (612) to the periphery (521), the upward indined surface (62) is adjacent to the upper surface (61) and the edge surface (64), a thickness of the upward inclined surface (62) is counterclockwise decreased from the upper surface (61) and the edge surface (64) along the periphery (521), the downward inclined surface (63) is adjacent to the upper surface (61) and the edge surface (64), and a thickness of the downward inclined surface (63) is clockwise decreased from the upper surface (61) and the edge surface (64) along the periphery (521).

14. The customized contact lens for astigmatism (50) of claim 13, wherein after the thickness of the upward indined surface (62) has been counterclockwise decreased from the upper surface (61) and the edge surface (64) along the periphery (521), the upward indined surface (62) joins the peripheral area (52), the upward indined surface (62) having an upward arc edge (621) extending from the inner edge (611) to the periphery (521); and wherein after the thickness of the downward indined surface (63) has been clockwise decreased from the upper surface (61) and the edge surface (64) along the periphery (521), the downward indined surface (63) joins the peripheral area (52), the downward indined surface (63) having a downward arc edge (631) extending from the inner edge (611) to the periphery (521).

15. The customized contact lens for astigmatism (50) of claim 13, further comprising a first contour line (622) at a joining portion of the upper surface (61) and the upward indined surface (62), the first contour line (622) disposed radially on the customized contact lens for astigmatism (50), the first contour line (622) having a first extension line (58) passing through a center (57) of the customized contact lens for astigmatism (50); and a second contour line(632) at a joining portion of the upper surface (61) and the downward indined surface (63), the second contour line (632) disposed radially on the customized contact lens for astigmatism (50), the second contour line (632) having a second extension line (59) passing through the center (57) of the customized contact lens for astigmatism (50).
